Europäisches Patentamt

European Patent Office

Office européen des brevets

(19)

(11) Veröffentlichungsnummer: **0 415 127 A1**

(12) **EUROPÄISCHE PATENTANMELDUNG**

(21) Anmeldenummer: 90115021.9

(22) Anmeldetag: 04.08.90

(51) Int. Cl.5: **C02F 1/56**, C08G 65/00, C08G 18/00

(30) Priorität: 18.08.89 DE 3927317

(43) Veröffentlichungstag der Anmeldung:
06.03.91 Patentblatt 91/10

(84) Benannte Vertragsstaaten:
AT BE CH DE ES FR GB IT LI NL SE

(71) Anmelder: **BAYER AG**

**W-5090 Leverkusen 1 Bayerwerk(DE)**

(72) Erfinder: **von Bonin, Wulf, Dr.**
**Droste-Hülshoff-Strasse 9**
**W-5068 Odenthal(DE)**
Erfinder: **Schäpel, Dietmar, Dr.**
**Johanniterstrasse 15**
**W-5000 Köln 80(DE)**

(54) Verfahren zur Aufarbeitung trüber Abwässer.

(57) Trübe Abwässer werden mit Polyether-Polyisocyanat-Präpolymeren als Flockungshilfsmittel aufgearbeitet.

EP 0 415 127 A1

## VERFAHREN ZUR AUFARBEITUNG TRÜBER ABWÄSSER

Die vorliegende Erfindung betrifft ein Verfahren zur Aufarbeitung trüber Abwässer mit neuen Flockungshilfsmitteln.

Es ist bekannt, trübe Abwässer aufzuarbeiten, indem man Koagulierhilfsmittel zusetzt, z.B. Eisensalze. Nachteilig hierbei ist, daß beim Einsatz solcher Koagulierhilfsmittel die Menge nicht verbrennbarer Rückstände ansteigt. Man ist deshalb daran interessiert, trübe Abwässer möglichst unter Zusatz von organischen Flockungshilfsmitteln aufzuarbeiten. Bisher bekannt gewordene organische Flockungshilfsmittel, z.B. solche auf der Basis von Polyethylenpolyaminen, kationischen Polyacrylamiden, Dicyandiamid/Formaldehyd-Kondensationsprodukten und sulfonierten Naphthalin/Formaldehyd-Kondensationsprodukten sind jedoch häufig nicht in der Lage, trübe Abwässer zuverlässig und in ausreichendem Ausmaß zu klären.

Es wurde nun ein Verfahren zur Aufarbeitung trüber Abwässer mit Flockungshilfsmitteln gefunden, das dadurch gekennzeichnet ist, daß man wasserlösliche und/oder mit Wasser mischbare Polyether-Polyisocyanat-Präpolymere als Flockungshilfsmittel einsetzt.

Für das erfindungsgemäße Verfahren geeignete Polyether-Polyisocyanat-Präpolymere (im folgenden auch PPP genannt) sind im Prinzip bekannt. Sie sind im allgemeinen so aufgebaut, daß an ein reaktive Wasserstoffatome enthaltendes niedermolekulares Startermaterial zunächst Alkylenoxid angelagert wird, wodurch ein Polyether entsteht und dieser mit Polyisocyanat umgesetzt wird, wobei sich PPP bilden, die freie NCO-Gruppen enthalten.

Beispielsweise können für das erfindungsgemäße Verfahren PPP verwendet werden, wie sie in den deutschen Offenlegungsschriften 25 21 277, 30 31 893, 34 02 696, 34 02 697 und 34 02 698 beschrieben sind, soweit es sich dabei um wasserlösliche oder mit Wasser mischbare Materialien handelt. "Mit Wasser mischbar" bedeutet hinsichtlich PPP im Rahmen der vorliegenden Erfindung, daß sich ausreichend stabile Dispersionen oder Emulsionen von solchen Präpolymeren in Wasser herstellen lassen.

Für das erfindungsgemäße Verfahren bevorzugte Polyether-Polyisocyanat-Präpolymere lassen sich z.B. herstellen, indem man aus 2- bis 4-funktionellen Startermaterialien, die als funktionelle Gruppen z.B. OH-, $NH_2$-, NHR-, COOH-und/oder $SO_3H$-Gruppen enthalten, durch Anlagerung von Ethylenoxid oder Ethylenoxid und Propylenoxid nichtionische, anionische oder kationische Polyether mit Molekulargewichten von über 1500 und OH-Zahlen von 5 bis 150 herstellt und diese mit 2- bis 4-funktionellen Polyisocyanaten, vorzugsweise aromatischen Diisocyanaten, zu Polyether-Polyisocyanat-Präpolymeren mit Isocyanatgehalten von 1,3 bis 15 Gew.-% umsetzt.

Besonders bevorzugt sind: Als Startermaterialien Glycerin, Triethanolamin, Ethylendiamin, Pentaerythrit und Trimethylolpropan, als Alkylenoxid Ethylenoxid und Propylenoxid in Mengenverhältnissen von 35 bis 75 Gew.-% Ethylenoxid und 65 bis 25 Gew.-% Propylenoxid (Summe 100 Gew.-%), als Polyether solche mit Molekulargewichten von 750 bis 6000 und OH-Zahlen von 15 bis 50, als Isocyanate Toluylendiisocyanate und Diphenylmethandiisocyanate und als fertige PPP solche mit Isocyanatgehalten von 2 bis 7 Gew.-%.

Die erfindungsgemäß einzusetzenden Polyether-Polyisocyanat-Präpolymere können so, wie sie bei der Herstellung anfallen, eingesetzt werden. Es können auch Gemische verschiedener PPP eingesetzt werden, beispielsweise solche, die sich hinsichtlich Art und/oder Menge des Startermaterials, Art und/oder Menge der Polyetherkomponente und/oder Art und/oder Menge des einzusetzenden Polyisocyanats unterscheiden. Weiterhin können Polyether-Polyisocyanat-Präpolymere im Gemisch mit beliebigen Isocyanaten eingesetzt werden, z.B. im Gemisch mit Isocyanaten, die identisch sind mit den bei der Präpolymerenherstellung eingesetzten und/oder im Gemisch mit anderen Isocyanaten, beispielsweise anionisch und/oder kationisch modifizierten aromatischen, araliphatischen und/oder aliphatischen Isocyanaten. Beispiele für ionisch modifizierte Isocyanate sind sulfonierte Diphenylmethandiisocyanate und mit tertiären Aminen, z.B. Triethanolamin, modifiziertes und gegebenenfalls quarterniertes Hexamethylendiisocyanat.

Die erfindungsgemäß einzusetzenden PPP oder sie enthaltende Gemische können als solche oder in gelöster Form angewendet werden. Als Lösungsmittel kommen mit Wasser mischbare und gegenüber Isocyanaten möglichst weitgehend inerte Lösungsmittel in Frage. Beispiele sind Glykoldimethylether, Methylacetat, Methylethylketon, Dimethylacetamid, Dimethylformal, Dioxan, Dimethylformamid, Trimethylorthoformiat und Caprolacton. Bevorzugt sind Lösungsmittel, die zusätzlich biologisch leicht abbaubar sind, wie tert.-Butanol, Aceton, Ethylacetat und Ethylformiat.

Die Polyether-Polyisocyanat-Präpolymere, sie enthaltende Gemische oder deren Lösungen in einem Lösungsmittel können direkt dem aufzuarbeitenden trüben Abwasser zugegeben werden. Man kann auch zunächst eine noch relativ konzentrierte Vorabmischung mit Wasser oder einem Teil des aufzuarbeitenden trüben Abwassers herstellen und dann diese Vorabmischung dem (restlichen) aufzuarbeitenden trüben Abwasser zufügen. Solche Vorabmischungen können beispielsweise bei Temperaturen zwischen 0 und 35°C, vorzugsweise zwischen 5 und 15°C, hergestellt werden. Geeignete Konzentrationen sind z.B. folgende: Für eine Lösung von PPP oder sie enthaltenden Mischungen in einem organischen Lösungsmittel 0,5 bis 60, vorzugsweise 10 bis 35 Gew.-% PPP, bezogen auf die fertige Lösung und für eine Vorabmischung mit Wasser der zuvor beschriebenen Art 4 bis 35 Gew.-% PPP, bezogen auf die fertige Vorabmischung.

Wie bereits die bekannten, so haben auch einzelne erfindungsgemäße Flockungshilfsmittel für unterschiedliche Abwässer eine unterschiedliche, aber leicht zu ermittelnde optimale Anwendungsmenge. Bei zu geringer oder zu großer Dosierung erfolgt häufig keine optimale Flockenbildung und Klärung. Im allgemeinen liegt diese optimale Anwendungsmenge erfindungsgemäßer Flockungshilfsmittel im Bereich von 0,01 bis 5 Gew.-%, bezogen auf die Menge aufzuarbeitendes trübes Abwasser, häufig im Bereich 0,1 bis 1 Gew.-%.

Die erfindungsgemäßen Flockungshilfsmittel wirken bei allen pH-Werten. Vorzugsweise weisen die zu behandelnden Abwässer pH-Werte im Bereich von 0,5 bis 10, besonders bevorzugt im Bereich 1 bis 7,5 auf. Die Temperatur der zu behandelnden Abwässer kann beispielsweise bei 5 bis 30°C liegen. Die Behandlungszeit kann beispielsweise im Bereich von 0,02 bis 4 Stunden betragen.

Das Vermischen von Polyether-Polyisocyanat-Präpolymeren oder sie enthaltende Mischungen mit anderen Komponenten und/oder aufzuarbeitendem Abwasser kann mit üblichen Vorrichtungen, z.B. Rührern oder Umwälzanlagen, erfolgen. Zur Herstellung der beschriebenen Vorabmischungen kann man auch Mischköpfe auf Rührwerks- oder Düsenbasis einsetzen, wie sie sonst für Mehrkomponenten-Polyurethan-Herstellungsprozesse verwendet werden, ebenso Statik-Mischer.

Nach der erfindungsgemäßen Bildung der Flocken kann man diese direkt auf übliche Weise abtrennen, z.B. durch Dekantieren, und so ein klares Abwasser erhalten. Man kann auch das die Flocken enthaltende Abwasser einer biologischen Klärstufe zuführen, die Flocken gegebenenfalls teilweise in der biologischen Klärstufe halten und sie gegebenenfalls erst danach abtrennen. Die Flocken können dann, insbesondere bei der Anwendung von mehr als 0,5 Gew.-% PPP (bezogen auf das zu klärende Abwasser), als Trägermaterial für Bakterien dienen und so insbesondere in Nitrifizierungs- und/oder anaeroben biologischen Klärstufen von Vorteil sein.

Die abgetrennten Flocken können, gegebenenfalls nach einer Trocknung, problemlos und ohne Bildung von zusätzlicher Asche verbrannt werden.

Das erfindungsgemäße Verfahren eignet sich zu Klärung von trüben Abwässern, wozu auch wasserhaltige Schlämme und sonstige trübe wäßrige Mischungen zu rechnen sind, wie sie bei den verschiedensten industriell durchgeführten Verfahren anfallen können und die aus Umweltschutzgründen oder vor einem möglichen Recycling geklärt werden sollen. Beispiele für industrielle Verfahren, deren trübe Abwässer erfindungsgemäß aufgearbeitet werden können, sind u.a. Textilausrüstung, Schlachtvieh-Verarbeitung, Papierherstellung, Metallbearbeitung, Deponie-Entwässerung, Kunststoffherstellung, Farbstoffsynthese und Bergbau.

Das erfindungsgemäße Verfahren arbeitet nach einem anderen Prinzip als bisher bekannte Verfahren zur Aufarbeitung trüber Abwässer mit Flockungshilfsmitteln. Er findungsgemäß werden erstmals Flockungshilfsmittel eingesetzt, die reaktive Gruppen enthalten, die mit Wasser und gegebenenfalls auch mit den auszufällenden Feststoffen oder sonstigen Abwasserbestandteilen reagieren können. Die erfindungsgemäße Ausflockung kann man deshalb im Gegensatz zu bisher bekannten Ausflockungsmethoden als Reaktiv-Flockung bezeichnen. Da es sich also um ein neues Verfahrensprinzip handelt, konnte nicht vorhergesehen werden, welche Effekte damit erzielbar sind. Mit dem erfindungsgemäßen Verfahren werden häufig auch dann noch Trübstoffe zufriedenstellend beseitigt, wenn konventionelle Flockungshilfsmittel keine ausreichende Klärung ergeben.

Die folgenden Beispiele erläutern die Erfindung. Die angegebenen Teile und Prozente beziehen sich auf das Gewicht, falls nichts anderes vermerkt ist.

## Beispiele

Die Beispiele 1 bis 3 betreffen die Herstellung von erfindungsgemäß zu verwendenden Polyether-Polyisocyanat-Präpolymeren.

## Beispiel 1

Eine Mischung aus 159 Teilen Toluylendiisocyanat (80 % 2,4- und 20 % 2,6-Isomeres) und 1200 Teilen eines Polyethers, der durch Anlagerung von 60 % Ethylenoxid und 40 % Propylenoxid an Glycerin erhalten worden war und eine Hydroxylzahl von 28 aufwies, wurde unter Rühren innerhalb von 30 Minuten auf 80°C erwärmt. Bei dieser Temperatur wurde die Reaktionsmischung weitere 3 Stunden gerührt und dann auf Raumtemperatur abgekühlt. Das erhaltene Präpolymer hatte einen Isocyanatgehalt von 3,7 % und eine Viskosität von 9500 mPa.s bei 25°C.

## Beispiel 2

865 Teile eines Polyethers, der durch Anlagerung von 60 % Ethylenoxid und 40 % Propylenoxid an Triethanolamin erhalten worden war und eine Hydroxylzahl von 28 aufwies, wurde mit 135 Teilen 1,6-Hexamethylendiisocyanat homogen vermischt und auf 50°C erwärmt. Die Reaktionsmischung wurde bei dieser Temperatur 7 Stunden gerührt und dann auf Raumtemperatur abgekühlt. Danach wurde 0,1 % Benzoylchlorid zugefügt und homogen verrührt. Das erhaltene Präpolymer wies einen Isocyanatgehalt von 5,1 % und eine Viskosität von 7400 mPa.s bei 23°C auf.

## Beispiel 3

Eine Mischung aus 256 Teilen Toluylendiisocyanat (80 % 2,4- und 20 % 2,6-Isomeres) und 2000 Teilen eines Polyethers, der durch Anlagerung von 40 % Ethylenoxid und 60 % Propylenoxid an Glycerin erhalten worden war und eine Hydroxylzahl von 21 aufwies, wurde unter Rühren innerhalb von 30 Minuten auf 80°C erwärmt. Bei dieser Temperatur wurde 3 Stunden weitergerührt und dann auf Raumtemperatur abgekühlt. Das erhaltene Präpolymer wies einen Isocyanatgehalt von 4 Gew.-% und eine Viskosität von 6200 mPa.s bei 25°C aufs.

Für die folgenden Beispiele 4 bis 8 wurde das trübe Abwasser einer technisch durchgeführten Styrolharz-Polymerisation verwendet, das einen pH-Wert von 6,8 und einen Feststoffgehalt von 1,5 % aufwies. Es handelte sich dabei um eine sehr stabile Trübung, die bei Filtrationsversuchen die Filter verklebte.

## Beispiel 4

Es wurde jeweils eine 10 %ige Lösung der gemäß den Beispielen 1, 2 und 3 hergestellten Präpolymeren in Aceton bereitet. In 100 Teile des Abwassers wurden in Form dieser Lösungen jeweils 0,35 % des Präpolymers bei 20°C eingerührt. Nach 3-minütigem Rühren wurde die Mischung in einen 100 ml-Meßzylinder gegeben und absetzen gelassen. Nach wenigen Minuten setzte in allen 3 Fällen eine Flockenbildung ein. Über Nacht hatten sich jeweils ca. 30 ml Flocken abgesetzt. Die darüberstehende Flüssigkeit war klar.

Analoge Ergebnisse wurden beim Einsatz von 0,2 und 0,1 % der Präpolymeren erhalten.

Beim Einsatz von 0,08 % der Präpolymeren blieb bei den Produkten aus den Beispielen 1 und 2 die über den Flocken stehende Flüssigkeit leicht getrübt, während sie bei dem Präpolymer aus Beispiel 3 noch klar blieb.

## Beispiel 5

Es wurden verfahren wie in Beispiel 4, jedoch wurden zunächst jeweils 70 % der gemäß den Beispielen 1, 2 und 3 hergestellten Präpolymeren mit jeweils 30 % Diphenylmethandiisocyanat vermischt. Von diesen Mischungen wurden 10 %ige Lösungen in Aceton hergestellt und diese Acetonlösungen jeweils entsprechend einer Dosierung von 0,1 und 0,4 der Präpolymer-Diphenylmethandiisocyanat-Mischung dem Abwasser zugegeben. In allen Fällen bildeten sich Flocken und die überstehende Flüssigkeit war klar.

## Beispiel 6

99 Teile des gemäß Beispiel 1 erhaltenen Präpolymers wurden zunächst mit 1 Teil Toluylendiisocyanat (80 % 2,4- und 20 % 2,6-Isomeres) gemischt. Dann wurde diese Mischung mit 1900 Teilen Eiswasser versetzt und mit Hilfe eines Schnellrührers eine Vorabmischung hergestellt.

10 000 Teile des Abwassers wurden durch Einrühren dieser Vorabmischung und Stehenlassen geklärt. Die eingesetzte Menge Präpolymer/Toluylendiisocyanat-Mischung entsprach einer Dosierung von 0,19 %. Die Trübung flockte gut aus, die über den Flocken stehende Flüssigkeit war klar.

## Beispiel 7

100 Teile des Abwassers wurden bei 20°C durch Zugabe von 15 %-iger Salzsäure auf einen pH-Wert von 2 gebracht. Von dem gemäß Beispiel 1 erhaltenen Präpolymer wurde eine 20 %ige Lösung in Aceton bereitet. Einmal 0,5 und einmal 1,5 Teile der Acetonlösung wurden in das vorbehandelte Abwasser eingerührt. Diese Dosierungen entsprachen 0,1 und 0,3 % Präpolymer, bezogen auf das Abwasser.

Die Probe mit der 0,1 %-Dosierung ergab eine schnelle Abscheidung von Flocken und eine klare, darüberstehende Flüssigkeit. Die Probe mit der 0,3 %-Dosierung ergab eine langsamere Abscheidung von Flocken und eine leicht trübe, darüberstehende Flüssigkeit.

## Beispiel 8 (Vergleichsbeispiel)

Zu dem Abwasser wurden jeweils 0,01, 0,1 und 1 % bekannte Flockungshilfsmittel hinzugefügt. Bei den Flockungshilfsmitteln handelte es sich um

    a) einen Typ auf der Basis von Polyethylenpolyamin,

    b) einen Typ auf der Basis eines kationischen Polyacrylamids,

    c) einen Typ auf der Basis eines Dicyandiamid/Formaldehyd-Kondensationsproduktes und

    d) einen Typ auf der Basis eines sulfonierten Naphthalin/Formaldehyd-Kondensationsprodukts.

Entweder fand keine Flockenbildung statt oder es bildeten sich Flocken, wobei dann jedoch die überstehende Flüssigkeit trüb blieb.

**Ansprüche**

1. Verfahren zur Aufarbeitung trüber Abwässer mit Flockungshilfsmitteln, dadurch gekennzeichnet, daß man wasserlösliche und/oder mit Wasser mischbare Polyether-Polyisocyanat-Präpolymere als Flockungshilfsmittel einsetzt.

2. Verfahren nach Anspruch 1, dadurch gekennzeichnet, daß es sich bei den Präpolymeren um solche handelt, die hergestellt wurden, indem man aus 2- bis 4-funktionellen Startermaterialien, die als funktionelle Gruppen OH-, $NH_2$-, NHR-, COOH- und/oder $SO_3H$-Gruppen enthalten, durch Anlagerung von Ethylenoxid oder Ethylenoxid und Propylenoxid nichtionische, anionische oder kationische Polyether mit Molekulargewichten von über 1500 und Hydroxylzahlen von 5 bis 150 herstellt und diese mit 2- bis 4-funktionellen Polyisocyanaten zu Polyether-Polyisocyanat-Präpolymeren mit Isocyanatgehalten von 1,3 bis 15 Gew.-% umsetzt.

3. Verfahren nach Ansprüchen 1 und 2, dadurch gekennzeichnet, daß man Gemische verschiedener Polyether-Polyisocyanat-Präpolymerer oder Polyether-Polyisocyanat-Präpolymere im Gemisch mit Isocyanaten einsetzt.

4. Verfahren nach Ansprüchen 1 bis 3, dadurch gekennzeichnet, daß man Polyether-Polyisocyanat-Präpolymere oder sie enthaltende Gemische gelöst oder in Form einer noch relativ konzentrierten Vorabmischung mit Wasser einsetzt.

5. Verfahren nach Ansprüchen 1 bis 4, dadurch gekennzeichnet, daß das zu behandelnde Abwasser einen pH-Wert im Bereich von 0,5 bis 10 aufweist.

6. Verfahren nach Ansprüchen 1 bis 5, dadurch gekennzeichnet, daß man es bei Temperaturen im Bereich 5 bis 30 °C durchführt.

7. Verfahren nach Ansprüchen 1 bis 6, dadurch gekennzeichnet, daß man nach der Ausflockung die Flocken durch Dekantieren vom klaren Abwasser trennt.

8. Verfahren nach Ansprüchen 1 bis 6, dadurch gekennzeichnet, daß man das Flocken enthaltende Abwasser einer biologischen Klärstufe zuführt.

# EUROPÄISCHER RECHERCHENBERICHT

**Europäisches Patentamt**

Nummer der Anmeldung

**EP 90 11 5021**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 315 596 (BASF) <br> * Seite 1; Ansprüche 1, 2 ** Seite 3, Zeile 20 - Seite 5, Zeile 19 @ Seite 8, Zeilen 1 - 5 @ Seite 9, Zeilen 6 - 12 @ Seite 9, Zeile 27 - Seite 10, Zeile 3 ** Seite 14, Zeilen 3 - 22 * <br> – – – | 1,2,4 | C 02 F 1/56 <br> C 08 G 65/00 <br> C 08 G 18/00 |
| A | US-A-4 402 363 (TEXACO) <br> * Spalte 5; Ansprüche 1-5 * <br> – – – | 1,6 | |
| D,A | DE-A-2 521 277 (BAYER) <br> * Seite 19; Anspruch 1 * <br> – – – – – | 1 | |

|  | RECHERCHIERTE SACHGEBIETE (Int. Cl.5) |
|---|---|
|  | C 02 F |

Der vorliegende Recherchenbericht wurde für alle Patentansprüche erstellt

| Recherchenort | Abschlußdatum der Recherche | Prüfer |
|---|---|---|
| Den Haag | 20 November 90 | TEPLY J. |